# EUROPEAN PATENT APPLICATION

(11) **EP 4 744 759 A1**
(43) Date of publication of application: **20.05.2026**
(21) Application number: 24213754.5
(22) Date of filing: 18.11.2024
(51) Int. Cl.: B01D 53/78, B01D 53/77

(54) **METHOD AND SYSTEM FOR FLUE GAS TREATMENT**

(71) Applicant: Kanadevia Inova AG, 8005 Zürich (CH)
(72) Inventor: Kaminsky, Jan Carsten, 8005 Zurich (CH); Ungricht, Thomas, 8005 Zurich (CH); Frey, Ruedi, 8005 Zurich (CH)
(74) Representative: Schaad, Balass, Menzl & Partner AG

(57) **Abstract**

The present invention relates to a method for treatment of a NH₃- and CO₂-comprising flue gas, whereby the method comprises at least the following steps:
a) provision of an ammonia-containing flue gas 12;
b) a quenching step involving injection of a first stage cooling water 18 having a temperature below the temperature of the ammonia-containing flue gas 12, thereby providing a water-saturated flue gas 16;
c) a first stage absorption step involving injection of an acidic cooling water 22 having a pH < 5 into the water-saturated flue gas 16, thereby providing an over-saturated, ammonia-reduced flue gas 24 having a temperature below the saturation temperature,
d) a second stage absorption step involving bringing the over-saturated, ammonia-reduced flue gas 24 into direct contact with a second stage cooling water 28, thereby providing a cooled, acid-reduced flue gas 30,
wherein a first stage process water 42 is collected after the first stage absorption step c) in a first sump 44 and at least part of said collected first stage process water 42 from the first sump 44 is recirculated and cooled for use in the quenching step and/or the first stage absorption step, and
wherein a second stage process water 52 is collected after the second stage absorption step d) in a second sump (54) and at least part of said collected second stage process water 52 is recirculated and cooled for use as second stage cooling water 28 in the second stage absorption step.

## Description

The present invention relates to a method for treatment of flue gas containing NH₃ and CO₂ according to Claim 1 and to a system for treatment of such a flue gas according to Claim 13.

Flue gases generally contain a variety of pollutants, inter alia acidic gases like SO₂ and HCl, CO₂, NH₃ and NOx (nitrogen oxides). The treatment of flue gases is therefore critical to reduce environmental impact and potential health risks.

Nitrogen oxides (NOx) are harmful pollutants that contribute to the formation of smog and acid rain and can have serious environmental and health impacts. The widespread use of ammonia-based flue gas cleaning processes, such as SNCR and SCR, significantly helps in controlling these emissions and meeting regulatory requirements for air quality. On the other hand, one major problem in ammonia-based flue gas purification systems is "ammonia slip" which refers to the unwanted release of ammonia (NH₃) from processes using ammonia or an ammonia-containing compound as a scrubbing agent to remove NOx from the flue gas. Minimizing ammonia slip is critical for both environmental and operational reasons, as ammonia can contribute to air pollution and lead to the formation of ammonium chloride aerosols, whose removal requires energy-intensive separation technology.

In addition to the aforementioned methods for effective removal of NOx, methods and systems for capturing CO₂ and other contaminants in form of acid gases from flue gas have become increasingly important for mitigating climate change, complying with regulations, reducing corrosion risks, and improving air quality.

To this end, many flue gas purification systems ("scrubbers") known in the art use amines for CO₂ capture and acid gas removal (e.g., SO₂ and/or H₂S). These systems are commonly referred to as amine scrubbers or sweetening units and operate based on the chemical reaction between the amine solution and the target acidic gases (e.g. CO₂ or SO₂) in the flue or process gas streams.

It has been recognized that many scrubber systems, particularly those involving chemical reactions (e.g., amine scrubbers for CO2 removal) operate more efficiently at lower temperatures. Cooling the flue gas can improve the solubility of gaseous pollutants and increase the overall effectiveness of the scrubbing process. The specific need and extent of cooling depend on the type of contaminants being removed and the particular scrubbing technology employed.

For example, in amine-based gas purification systems, effective cooling of the flue gas to a temperature range of about 30-50°C is required because of the heat-sensitivity of the amines. In particular, excessively hot flue gas can degrade the amine, leading to the formation of by-products, such as heat-stable salts, that reduce the efficiency of the amine and increase operating costs due to the need for frequent solution regeneration or replacement. Also, if the flue gas is too hot, some amine may vaporize along with the gas, leading to amine losses through carryover. This increases the operating cost, as more amines will need to be replenished.

This cooling of the flue gas, on the other hand, generally requires large volumes of water because of the high heat load that must be managed to bring down the temperature of the gases. Many flue gas cooling systems use cooling towers where hot water is cooled down for reuse in the system. For instance, EP 3705167 A1 discloses a system in which a gas washing column and a gas cooling column are made to communicate with each other through a gas communication path provided with a sloped plate. The sloped plate is disposed at a connection opening on the gas washing column side to regulate the flow of gas, so that efficiency of collision of cleaned gas and a fluid bath at the time of entry of the cleaned gas into the communication path can be increased. Furthermore, a condensed water transfer line is provided through which condensed water recovered at the gas cooling column is transferred to the gas washing column, and the condensed water from the gas cooling column is introduced into the gas washing column, thereby making it possible to reduce the amount of makeup water that is required.

Nonetheless, even with cooling towers, water losses occur through evaporation and drift, necessitating constant replenishment, which adds to the overall water demand.

In view of the above, the problem solved by the present invention is therefore to a provide a method that allows for effective removal of contaminants, including NH₃, NOx, ammonia, and acid gases, from a flue gas while reducing water consumption and minimizing aerosol formation during the flue gas treatment. This problem is solved by the method according to Claim 1 and the flue gas purification system according to Claim 13. Preferred embodiments are subject to the dependent claims.

The method of the present invention is for treatment of a flue gas comprising CO₂ and NH₃, said method comprises at least the following steps:
a) provision of an ammonia-containing flue gas;
b) a quenching step involving injection of a first stage cooling water having a temperature below the temperature of the ammonia-containing flue gas to cool the ammonia-containing flue gas to a saturation temperature, thereby providing a water saturated flue gas;
c) a first stage absorption step involving injection of an acidic cooling water having a pH < 5 and a lower temperature than the saturation temperature into the water saturated flue gas, thereby providing an over-saturated, ammonia-reduced flue gas having a temperature below the saturation temperature,
d) a second stage absorption step involving bringing the over-saturated, ammonia-reduced flue gas into direct contact with a second stage cooling water, the second stage cooling water having a pH in the range >6 and having a temperature below the temperature of over-saturated flue gas; thereby providing a cooled, acid-reduced flue gas.

In the inventive method, an ammonia-containing flue gas is provided. Said ammonia-containing flue gas generally contains at least NH₃ and CO₂ as pollutants. The ammonia may initially be present, e.g. in case of a flue gas from sewage sludge incineration plants that often contains ammonia, or it may stem from an earlier NOx reduction treatment of the flue gas. NOx reduction steps are common in flue gas treatment and generally involve treatment of the flue gas with an aqueous ammonia solution or an urea solution - usually at a temperature above 180°C - for removal of NOx from the flue gas. Most commonly, such a NOx reduction treatment involves one of SNCR (Selective Non-Catalytic Reduction) and SCR (Selective Catalytic Reduction). SNCR involves injecting a reducing agent, typically ammonia (NH₃) or urea (CO(NH₂)₂), directly into the flue gas at high temperatures (around 850°C to 1100°C). The reaction occurs in the absence of a catalyst. SCR also involves injecting ammonia (NH₃) or urea (CO(NH₂)₂) into the flue gas stream, but the reaction is facilitated by a catalyst (typically made of vanadium, titanium, or zeolites). The process takes place at lower temperatures compared to SNCR, typically around 180°C to 300°C. As mentioned in the introductory portion of this application, one major drawback of such NOx-reduction processes using ammonia or an ammonia-containing compound as a scrubbing agent is the unwanted release of ammonia into the flue gas and the possible formation of ammonium chloride aerosols.

Treatment steps b) to d) of the inventive method serve for cooling of the flue gas and for removing problematic substances contained in the flue gas. These treatment steps b) to d) can be divided into two stages: the first stage includes the quenching step b) and the first stage absorption step c). The second stage includes the second stage absorption step d).

In the first stage, the ammonia-containing flue gas is initially cooled using a quenching system, where excess heat is removed. During this quenching step, the first stage cooling water injected into the flue gas absorbs heat until the flue gas reaches its saturation point. At this temperature, the water injection rate can be controlled so that it is just enough to maintain saturation, without excess formation of condensate. Thus, the amount of condensate produced can be minimized, such that make-up water is not required.

In the first stage absorption step, the water saturated flue gas is cooled further down, while at the same time, basic components are absorbed from the flue gas. To this end, the flue gas is brought into contact with acidic cooling water having a pH below 5. Thereby, the temperature of the flue gas is lowered below its saturation temperature and the acidic pH of the acidic cooling water allows absorption of ammonia contained in the flue gas (often stemming from an earlier NOx reduction step). This first stage (acidic) absorption step is critical for neutralizing and removing any basic contaminants (in particular ammonia) in the flue gas. In addition, by injection of the acidic cooling water, any evaporation losses occurred during the quenching step prior to the flue gas reaching its saturation temperature can be compensated. For the cooling and absorption, the acidic cooling water and the saturated flue gas can be brought into contact in a co-current or counter-current fashion.

After the first stage absorption step, the over-saturated, ammonia-reduced flue gas entering the second stage contains almost exclusively acid gases. By bringing this flue gas into direct contact with the second-stage cooling water having a pH above 6, the acid gases contained in the flue gas can be well absorbed in the second stage absorption step.

A key aspect of the method of the present invention is therefore that cooling and selective chemical absorption of harmful substances in the flue gas occurs simultaneously, but is divided into two stages. Specifically, cooling of the flue gas and removal of ammonia slip occur in the first stage, whereas further cooling of the flue gas and absorption of acid gas components occur in the second stage. The cooling water of the first stage differs from the one of the second stage in terms of pH. This allows for selective absorption of contaminants during the first and second stage, respectively.

Thanks to these first and second stage treatment steps, the risk of aerosol formation and therefore the risk of aerosol leakage is reduced, which is beneficial from an environmental view and avoids increased amine emissions after a downstream amine scrubber. The two stages use different cooling water; the first stage uses acidic cooling water having a pH below 5 and the second stage uses cooling water having a pH above 6. As will be explained in the following, these cooling waters are separated into two circuits:
In line with the present invention, excess acidic cooling water and condensate discharged from the first stage absorption step is collected as first stage process water in a first sump and at least part of said collected first stage process water from the first sump is recirculated and cooled for use in the quenching step and/or the first stage absorption step.

The recirculation of water greatly reduces the water consumption and thus improves water utilization and sustainability. The first stage therefore preferably includes a water circuit connecting the first sump with the quenching step and/or the first stage absorption step.

Furthermore, second stage cooling water discharged from the second stage absorption step is collected as second stage process water in a second sump and at least part of said collected second stage process water is recirculated and cooled for use in the second stage absorption step. This preferred embodiment involves a second stage cooling water circuit connecting the second sump with the second stage absorption step. By recirculating the collected second stage process water, the water consumption in the second stage can be reduced significantly. The cooling of the recirculated second stage process water - or of the cooling waters in general - is preferably achieved with the aid of a heat exchanger.

Thus, it is one key aspect of the present invention that both the first stage cooling water and the second stage cooling water are both collected as first and second stage process waters in a respective sump, and recirculated in separate water circuits. The recirculated process water in each water circuit is preferably routed through a heat exchanger for lowering the temperature of the recirculated first and second stage process water down below the temperature of the flue gas in the first and second cooling stage, respectively.

It is particularly preferred that the heat transferred from the flue gas to the first and second stage cooling waters is recovered and used in processes that require thermal energy in order to reduce the overall energy consumption and increase the energy efficiency of the facility.

In a preferred embodiment, the inventive method further includes an aerosol separation step e) involving treatment of the cooled, acid-reduced flue gas in an aerosol separator. By controlling the pH and temperature of the first stage cooling water and the acidic cooling water in steps b) and c), the formation of aerosol is already substantially reduced compared to common quenching steps used in the prior art. Nonetheless, if a very low aerosol content is desired, an additional aerosol separation step is preferably included.

Preferably, the inventive method also includes a CO₂ capturing step involving treatment of the cooled, acid-reduced flue gas from step d) or the cooled, acid-reduced flue gas exiting the aerosol separator in an amine scrubber, thereby providing a purified, CO₂-reduced flue gas. In this preferred embodiment, the method of the present invention involves several treatment steps that occur prior to feeding the gas to an amine scrubber. In the amine scrubber, the absorption of CO₂ from a gas stream typically involves a reaction between carbon dioxide and an amine solution, such as monoethanolamine (MEA). The CO₂ forms chemical bonds with the amine, resulting in a liquid solution containing amines complexed with CO₂ (e.g., in the form of carbamates or bicarbonates). By treating the flue gas in line with steps a) to d) - and optionally step e) - of the inventive method prior to entering the amine scrubber enables to protect the amine solution, improve CO₂ absorption efficiency, prevent excessive water vapor from entering the scrubber, minimize amine losses, and ensure material compatibility with the scrubber system.

In a particularly preferred embodiment, the inventive method involves both an aerosol separation step and a CO₂-capturing step. In this case, in the aerosol separation step, the cooled, acid-reduced flue gas is treated in an aerosol separator prior to delivering the flue gas to an amine scrubber for CO₂ removal.

In a preferred embodiment, the temperature difference between the saturated flue gas of step b) and the over-saturated flue gas of step c) is in the range of 1°C to 5°C. Thus, the main cooling is accomplished during the quenching step. The temperature of the over-saturated flue gas is preferably in the range of 50°C to 64°C, more preferably 50°C to 60°C.

Preferably, the acidic cooling water is prepared by cooling and adding an acid, preferably sulphuric acid, to at least part of the recirculated first stage process water from the first sump. In this embodiment, the first stage process water recirculated from the first sump is preferably divided into two water streams: A first stream of recirculated first stage process water is used in the quenching step and a second stream of recirculated first stage process water is used in the first stage absorption step. As regards the latter, the second stream of recirculated first stage process water from the first sump is preferably used to prepare the acidic cooling water by cooling it below the temperature of the water-saturated flue gas. Said cooling can be accomplished with the aid of a heat exchanger. As mentioned, the pH of the second stream of recirculated water is preferably lowered by addition of an acid. Due to absorption of basic components from the flue gas during the first absorption step - in particular ammonia stemming from the earlier NOx reduction step - the water collected in the first sump has an increased pH compared to the pH of the acidic cooling water injected in step c). By adding an acid to the recirculated water, a sufficiently low pH can be maintained to enable continuing adequate absorption of basic components. If a later treatment step in an amine scrubber is present, the acid is preferably sulphuric acid as it is commonly used in an acid wash section following the amine scrubber and therefore in this case already available in the system.

It is further preferred that the pH of the first stage cooling water collected in the first sump is measured and the amount of acid added to prepare the acidic cooling water is adjusted to keep the pH of the collected first stage cooling water below 5. Specifically, an automated feedback-loop is preferably used to regulate the amount of acid that is added to recirculated first stage process water. With "a feedback-loop", it is meant that the measured pH of the collected cooling water is sent to a control system (feedback controller). The feedback controller compares the measured pH to a desired set point (target pH level) . Based on the difference between the measured pH and the target pH, the controller calculates the appropriate adjustment needed in the amount of acid to be added in the next cycle. This way, the pH of the collected first stage cooling water in the first sump can be kept at a certain level - here below 5. The automated feedback loop improves efficiency and ensures that the system quickly adapts to changes, helping to maintain the desired pH level for effective flue gas treatment.

Preferably, the acidic cooling water has a pH in the range of 1 - 4, more preferably a pH in the range of 2 - 3. This preferred pH range allows for essentially complete ammonia absorption, such that the over-saturated flue gas is essentially free from ammonia.

It is further preferred that a base, preferably NaOH, is added to the recirculated second stage process water to adjust the pH to at least 6, preferably to a range of 6-7.

In analogy to the cooling and the addition of an acid for the preparation of the acidic cooling water, it is preferred to measure the pH of the second stage cooling water collected in the second sump and the amount of base added to prepare the second stage cooling water is adjusted to keep the pH of the first stage process water collected in the second sump above 6. Notably, in this embodiment, the pH is measured after absorption of acidic components, such as HCl, from the flue gas. Thus, the pH of the second stage cooling water injected into the flue gas will usually be higher than the pH measured in the second sump. An automated feedback loop is preferably used to adjust the amount of added base depending on the pH of the collected second stage cooling water. If the pH of the collected second stage cooling water is below 6, the amount of added base is upregulated, whereas in case of a high measured pH, the amount of added base is reduced. This way, the pH in the collected second stage cooling water can be maintained at a desired level - here above 6.

In a preferred embodiment, the cooling in the second stage absorption step d) occurs in a direct contact cooler in which the second stage cooling water and the flue gas are transported in a countercurrent fashion. In the direct contact cooler, the second stage cooling water and the flue gas are in direct contact, allowing for efficient heat and mass transfer. The countercurrent flow arrangement maximizes the temperature and concentration gradients between the flue gas and the second stage cooling water along the entire length of the contact area, thereby enabling fast and efficient heat and mass transfer. Also, a direct contact cooler does not require the use of heat exchangers with complex tubing or plate arrangements in the gas, which simplifies the design. This can reduce both the initial capital cost and ongoing maintenance expenses as there are fewer components that may need repair or replacement.

In a preferred embodiment the ammonia-containing flue gas enters the quench at a temperature of about 140°C. It is further preferred that after the quenching step, the temperature of the water-saturated flue gas is in the range of 55°C to 65°C. This saturation temperature is mostly dependent on the gas composition, in particular the water content and flue gas temperature. During the subsequent first stage absorption step, the temperature is preferably lowered below 64°C, more preferably to a range of 50°C to 64°C. A flue gas temperature of 50°C to 65°C is particularly beneficial for ammonia (NH₃) absorption from the flue gas, especially when the ammonia is a residual component from an upstream Selective Non-Catalytic Reduction (SNCR) process. Since the ammonia the flue gas is absorbed in the first stage absorption step using acidic cooling water (e.g. containing sulfuric acid to form ammonium sulfate), moderate temperatures of 50-65°C help to ensure effective reaction rates without excessively cooling the system. This range allows the ammonia to react with the absorber solution efficiently, forming ammonium salts that can be managed or collected as byproducts.

In the quenching step it is further preferred that the ammonia-containing flue gas and the first stage cooling water are brought into co-current contact with each other. Using a co-current flow arrangement, i.e. where the hot flue gas and the first stage cooling water flow in the same direction (parallel to each other), is beneficial because the temperature difference between the flue gas and first stage cooling water is greatest at the point of entry and decreases as both fluids move along the system. This results in a more gradual cooling of the flue gas, which facilitates control over the start of condensation and the gas temperature. In the quenching step, the temperature of the flue gas is only lowered to the gas' saturation temperature, which allows minimizing the amount of condensate formed during the quenching.

Preferably, the second stage cooling water in the second stage absorption step has a temperature below 65°C, more preferably below 60°C. A flue gas temperature below 65°C allows for good solubility of acidic gases while avoiding increased vaporization. In addition, cooling the flue gas in the second stage absorption step to below 65°C will promote the condensation of more water vapor and the formation of fine droplets. This process aids in the removal of submicron particles and aerosols, as condensed droplets can agglomerate with particles, making them larger and easier to capture in a downstream aerosol separator.

If a downstream amine scrubber is used, the second stage cooling water has preferably a temperature below 35°C, preferably in the range of 10-30°C. Cooling the flue gas to below 35°C can also improve the solubility and absorption of CO₂ in a downstream amine scrubber, increasing the overall CO₂ capture efficiency. If the flue gas enters the amine scrubber at a cooler temperature, it also helps minimizing thermal degradation of amine solution, meaning that the amine solution is less likely to break down into byproducts, reducing operational costs and extending the life of the amine solution.

If an aerosol separator is present, the aerosol separator is preferably a venturi type nozzle (scrubber like ring jet) or a Brownian diffusion filter. Venturi type nozzles can handle relatively high airflow rates, which is beneficial in industrial applications where large volumes of aerosol need to be processed. Brownian diffusion filters are particularly effective at capturing smaller particles. It is further preferred that the aerosol separator is located at a gas outlet of a second stage absorption unit, where the second stage absorption step takes place.

In another aspect, the present invention also relates to a system for treatment of an ammonia-containing flue gas comprising
- a flue gas source configured to provide an ammonia-containing flue gas,
- a quenching unit configured to cool the ammonia-containing flue gas from the flue gas source to a saturation temperature to provide a water-saturated flue gas;
- a first stage absorption unit configured to bring the water-saturated flue gas into contact with an acidic cooling water having a pH below 5 to provide an over-saturated, ammonia-reduced flue gas having a temperature below the water-saturated flue gas, and
- a second stage absorption unit configured to bring the over-saturated, ammonia-reduced flue gas into direct contact with a second stage cooling water having a pH above 6 and a temperature below the over-saturated, ammonia-reduced flue gas to provide a cooled, acid-reduced flue gas.

In the inventive system, the flue gas source is preferably a NOx reduction unit that generally uses either a SNCR or a SCR process to provide the ammonia-containing flue gas. In case of an SNCR process, a reducing agent such as urea or ammonia is injected directly into the flue gas at high temperatures (typically 850°C to 1100°C). The reducing agent reacts with nitrogen oxides (NOx) in the flue gas to form nitrogen (N₂) and water (H₂O), reducing the NOx emissions. In case of an SCR process, a reducing agent (typically ammonia (NH₃)) is injected into the flue gas stream. The gas then passes over a catalyst (often made of titanium dioxide (TiO₂), vanadium pentoxide (V₂O₅), or zeolites) at a lower temperature range (typically 180°C to 450°C). The catalyst facilitates the reaction between ammonia and NOx, converting NOx into nitrogen (N₂) and water (H₂O).

The quenching unit preferably uses a co-current quench, i.e. a cooling process in which the hot flue gas and the first stage cooling water are brought into direct contact, and they flow in the same direction (parallel to each other) . The primary purpose of the co-current quench is to rapidly cool the hot flue gas by transferring heat from the gas to the cooling water, while ensuring controlled and efficient heat transfer. By lowering the temperature of the flue gas only to the gas' saturation temperature (also known as the dew point), the formation of condensate can be minimized.

The first stage absorption unit serves two purposes, namely cooling of the flue gas below the gas' saturation temperature and absorption of ammonia and other basic components from the flue gas. The saturated flue gas from the quenching unit is therefore brought into contact with acidic first stage cooling water - which may occur in co-current or counter-current fashion. By the injection of first stage cooling water, any evaporation losses occurred during the quenching step can be compensated. Preferably, the first stage absorption unit includes a heat exchanger for cooling the water-saturated flue gas.

The purpose of the second stage absorption unit is to further cool the over-saturated flue gas and to absorb acidic components, in particular SO₂, from the flue gas. Removing acidic components from the flue gas is important to protect downstream equipment, in particular a downstream amine scrubber. The second stage absorption unit is preferably a counter-current packed scrubber.

In addition, the inventive system further comprises
- a first sump for collecting first stage process water discharged from the first stage absorption unit;
- recirculation pipes connecting the first sump with one or both of the quenching unit and the first stage absorption unit via a first cooling unit configured to cool recirculated first stage process water;
- a second sump for collecting water second stage process discharged from the second stage absorption unit; and
- recirculation pipes connecting the second sump with the second stage absorption unit via a second cooling unit configured to cool recirculated second stage process water.

The provision of the first and second sump, and the recirculation pipes allows that the water circuits of the first stage cooling water and the second stage cooling water can be separated. This has the advantage that selective chemical absorption can occur during the first and second cooling stages, separately.

Preferably, the first sump and the first stage absorption unit are connected via an acid addition device configured to prepare the acidic cooling water by adding an acid to the recirculated first stage process water.

It is further preferred that the recirculation pipes connect the second sump with the second stage absorption unit via a base addition device. The base addition device is configured to add a base to the recirculated second stage process water.

The benefits arising by preparing the acidic cooling water by acid addition to recirculated first stage process water, and by preparing adding a base to the recirculated second stage process water have been described in detail above in connection with the corresponding embodiments of the inventive method.

In a preferred embodiment, the inventive system further includes an aerosol separator configured to separate aerosols from the cooled, acid-reduced flue gas from the second stage absorption unit. It is therefore preferably located at a gas outlet of the second stage absorption unit. Preferably, the aerosol separator is a venturi type nozzle or a Brownian diffusion filter. By separating aerosols from the flue gas after the second stage absorption step with the aid of a Brownian diffusion filter, there is no need for a downstream demister - which is often used in the prior art. The aerosol separator preferably allows reducing the aerosol content in the flue gas below 10⁵ particles/cm³, preferably below 10³ particles/cm³. If the flue gas contains high aerosol levels when entering a downstream amine scrubber, it can lead to high amine losses due to amine aerosol formation.

The inventive system preferably also includes an amine scrubber configured to capture CO₂ from either the cooled, acid-reduced flue gas discharged from the second stage absorption unit, or an aerosol-reduced flue gas discharged from the aerosol separator. Most preferably, the amine scrubber is configured to capture CO₂ from the cooled, acid-reduced flue gas discharged from the aerosol separator. Since basic and acidic components as well as aerosols have been removed from the flue gas upstream of the amine scrubber, degradation and loss of amines used to capture CO₂ in the amine scrubber can be minimized.

The system preferably further includes a post scrubber downstream of the amine scrubber, in which potential byproducts, in particular volatile organic compounds (VOCs, are removed from the flue gas stream before discharge).

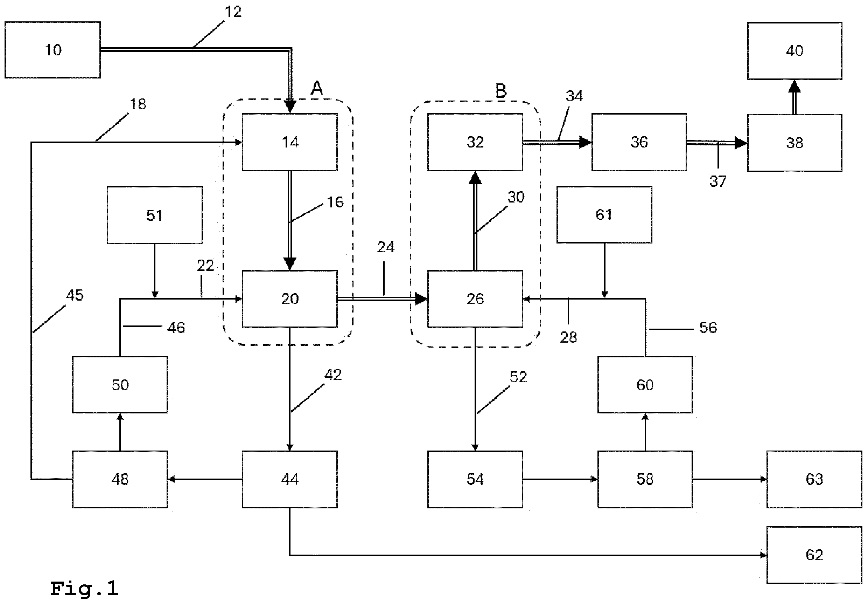

The present invention will be further illustrated in connection with the attached figure, in which
Fig. 1 shows a schematic representation of a preferred embodiment of the inventive method for the treatment of a flue gas.

In the preferred embodiment of the inventive method shown in Fig. 1, there are two kinds of arrows connecting different units of the inventive system: normal arrows are used to illustrate the flow of water whereas double-line arrows are used to illustrate the flow of gaseous components.

In the shown embodiment, a CO₂-containing flue gas, e.g. from a waste incinerator, is first treated in a NOx reduction unit 10 using a SNCR or SCR process to provide an ammonia-containing flue gas 12 reduced in NOx. Said ammonia-containing flue gas 12 is then delivered to a quenching unit 14, in which the ammonia-containing flue gas 12 is cooled to a saturation temperature to provide a water-saturated flue gas 16. The quenching unit 14 uses a co-current quench, in which the hot ammonia-containing flue gas 12 is brought into direct contact with first stage cooling water 18 while flowing in the same direction (parallel to each other). The water-saturated flue gas 16 from the quenching unit 14 is then delivered to a first stage absorption unit 20 in which said water-saturated flue gas 16 is brought into contact with an acidic cooling water 22 having a pH below 5. The quenching unit 14 and the first stage absorption unit 20 are part of a first cooling stage A. In the first stage absorption unit 20 the temperature of the water-saturated flue gas 16 is further lowered and ammonia and other components are absorbed from the flue gas 16.

A resulting over-saturated, ammonia-reduced flue gas 24 having a temperature below the water-saturated flue gas 16 is discharged from the first stage absorption unit 20 and delivered to a second stage absorption unit 26. The latter is part of a second cooling stage B and configured to bring the over-saturated, ammonia-reduced flue gas 24 into direct contact with a second stage cooling water 28. Said second stage cooling water 28 is separate from the first stage cooling water 18 and the acidic cooling water 22 used in the first stage. It has a pH above 6 and a temperature below the over-saturated, ammonia-reduced flue gas 24 coming from the first stage A. The second stage absorption unit 26 is a counter-current packed scrubber that is configured to cool the over-saturated flue gas 24 coming from the first stage absorption unit 20 further down and to absorb acidic components, in particular SO₂, from the flue gas 24. A cooled, acid-reduced flue gas 30 is discharged from the second stage absorption unit 26 and passed through an aerosol separator 32. Both the second stage absorption unit 26 and the aerosol separator 32 are part of the second cooling stage B. The aerosol separator 32 is a venturi type nozzle located at a gas outlet of the second stage absorption unit 26 or a Brownian diffusion filter. It effectively separates aerosols from the flue gas 30. If a Brownian diffusion filter is used there is no need for a downstream demister. A resulting cooled, aerosol-reduced flue gas 34 is discharged from the aerosol separator 32 and delivered to an amine scrubber 36 for capturing CO₂. This provides a purified, CO₂-reduced flue gas 37. Since basic and acidic components as well as aerosols have been removed from the initial flue gas 12 upstream of the amine scrubber 36, degradation and/or loss of amines used to capture CO₂ in the amine scrubber 36 can be minimized.

Downstream of the amine scrubber 36 a post scrubber 38 is provided in which potential byproducts, in particular volatile organic compounds (VOCs), are removed from the flue gas stream 37 before discharge. From the post scrubber 38, the cleaned flue gas is discharged to a stack 40.

As illustrated in Fig. 1, there are two separate water circuits used for the first cooling stage A and the second cooling stage B, respectively. These water circuits are described in the following.

The first cooling stage A uses first stage cooling water 18 and acidic cooling water 22 to lower the temperature of the ammonia-containing flue gas 12 coming from the NOx reduction unit 10. Since the quenching unit 14 lowers the temperature of the flue gas 12 only to the gas' saturation temperature, the amount of condensate formed during the quenching is minimal. On the other hand, the injection of the acidic cooling water 22 in the first stage absorption unit 20 results in a stream of first stage process water 42 that consists of excess cooling water and condensate. Said first stage process water 42 is discharged from the first stage absorption unit 20 and is collected in a first sump 44. From this first sump 44, at least some of the collected first stage process water 42 is recirculated to the quenching unit 14 and to the first stage absorption unit 20 via respective recirculation lines. Recirculation of the first stage process water 42 is achieved with the aid of a pump 48. Specifically, a first recirculation line 45 connects the first sump 44 and the quenching unit 14, and a second recirculation line 46 connects the first sump 44 and the first stage absorption unit 20. In between the first sump 44 and the first stage absorption unit 20, a heat exchanger 50 and an acid addition device 51 are provided. The heat exchanger 50 and the acid addition device 51 are used for the preparation of the acidic cooling water 22 from recirculated first stage process water 42 by lowering the temperature of the recirculated first stage process water 42 below the temperature of the water-saturated flue gas and by lowering the process water's pH by the addition of sulphuric acid. After the cooling and acid addition, the recirculated first stage process water 42 is delivered to the first stage absorption unit 20 and injected as acidic cooling water 22 into the water-saturated flue gas 16.

The amount of acid added to the first stage process water 42 for the above-described preparation of the acidic cooling water 22 is regulated using an automated feedback-loop involving a feedback controller (not shown). The feedback controller compares the pH of the first stage process water 42 measured in the first sump 44 to a target pH level. Based on the difference between the measured pH and the target pH, the controller calculates the appropriate adjustment needed in the amount of acid to be added in the next cycle. This way, the pH of the collected first stage process water 42 in the first sump 44 is kept below 5.

The second cooling stage B uses second stage cooling water 28 to lower the temperature of the ammonia-reduced, over-saturated flue gas 24 coming from the first stage absorption unit 20. The injection of second stage cooling water 28 in the second stage absorption unit 26 results in a stream of second stage process water 52 that consists of excess second stage cooling water 28 and condensate. Said second stage process water 52 is discharged from the second stage absorption unit 26 and is collected in a second sump 54. From this second sump 54, the collected second stage process water 52 is recirculated to the second stage absorption unit 26 via a third recirculation line 56 and with the aid of a second pump 58. Thus, the third recirculation line 56 connects the second sump 54 and the second stage absorption unit 26. In between the second sump 54 and the second stage absorption unit 26, a second heat exchanger 60 and a base addition device 61 are provided. The second heat exchanger 60 and the base addition device 61 are used for the preparation of the second stage cooling water 28 from recirculated second stage process water 52 by lowering the temperature of the recirculated second stage process water 52 below the temperature of the over-saturated flue gas 24 and by increasing the process water's pH by the addition of a base, specifically caustic soda. After the cooling and base addition, the recirculated second stage process water 52 is delivered to the second stage absorption unit 26 and injected as second stage cooling water 28 into the over-saturated flue gas 24.

Thus, the water circuits of the first stage cooling water 18 / acidic cooling water 22 and the second stage cooling water 28 are separated, such that absorption of basic components can occur during the first cooling stage A and absorption of acidic components from the flue gas is achieved during the second cooling stage B.

Usually, not all process water 42, 52 collected in the sumps 44, 54 is recirculated, but streams 62, 63 of effluent water are discharged from the first sump and second sump 44, 54, respectively. Such small streams of effluent water help purging contaminants from the system, preventing the build-up of substances that could damage equipment or reduce the efficiency of the cooling process.

## Claims

1. Method for treatment of a flue gas comprising CO₂ and NH₃, said method including at least the following steps:
a) Provision of an ammonia-containing flue gas (12) comprising CO₂ and NH₃;
b) a quenching step involving injection of a first stage cooling water (18) having a temperature below the temperature of the ammonia-containing flue gas (12) to cool the ammonia-containing flue gas (12) to a saturation temperature, thereby providing a water-saturated flue gas (16) ;
c) a first stage absorption step involving injection of an acidic cooling water (22) having a pH < 5 and a lower temperature than the saturation temperature into the water-saturated flue gas (16), thereby providing an over-saturated, ammonia-reduced flue gas (24) having a temperature below the saturation temperature, and
d) a second stage absorption step involving bringing the over-saturated, ammonia-reduced flue gas (24) into direct contact with a second stage cooling water (28), the second stage cooling water (28) having a pH above 6 and having a temperature below the temperature of over-saturated flue gas (24), thereby providing a cooled, acid-reduced flue gas (30),
wherein a first stage process water (42) is collected after the first stage absorption step c) in a first sump (44) and at least part of said collected first stage process water (42) from the first sump (44) is recirculated and cooled for use in the quenching step and/or the first stage absorption step, and
wherein a second stage process water (52) is collected after the second stage absorption step d) in a second sump (54) and at least part of said collected second stage process water (52) is recirculated and cooled for use as second stage cooling water (28) in the second stage absorption step.

2. Method according to Claim 1, further comprising an aerosol separation step e) involving treatment of the cooled, acid-reduced flue gas (30) from step d) in an aerosol separator (32), thereby providing a cooled, aerosol-reduced flue gas (34).

3. Method according to Claim 1 or 2, further comprising a CO₂ capturing step involving treatment of the cooled, acid-reduced flue gas (30) from step d) or the cooled, aerosol-reduced flue gas (34) exiting the aerosol separator (32) in an amine scrubber (36), thereby providing a purified, CO₂-reduced flue gas (37).

4. Method according to any of Claims 1 to 3, wherein the temperature difference between the water-saturated flue gas (16) of step b) and the over-saturated flue gas (24) of step c) is in the range of 1°C to 5°C.

5. Method according to any of Claims 1 to 4, wherein the acidic cooling water (22) is prepared by adding an acid, preferably sulphuric acid, to at least part of the recirculated first stage process water (42) from the first sump (44).

6. Method according to Claim 5, wherein the pH of the first stage process water (42) collected in the first sump (44) is measured and the amount of acid added to prepare the acidic cooling water (22) is adjusted to keep the pH of the collected first stage process water (42) below 5.

7. Method according to any of Claims 1 to 6, wherein the acidic cooling water (22) has a pH in the range of 1 - 4, more preferably a pH in the range of 2 - 3.

8. Method according to Claim 7, wherein the pH of the collected second stage process water (52) in the second sump (54) is measured and a base, preferably NaOH, is added to the recirculated second stage process water (54) to adjust the pH to at least 6, preferably to a range of 6-7.

9. Method according to any one of Claims 1 to 8, wherein the cooling in the second stage absorption step d) occurs in a direct contact cooler in which the second stage cooling water (28) and the over-saturated, ammonia-reduced flue gas (24) are transported in a countercurrent fashion.

10. Method according to any one of Claims 1 to 9, wherein after the quenching step, the temperature of the water-saturated flue gas (16) is in the range of 55°C to 65°C.

11. Method according to any one of Claims 1 to 10, wherein the second stage cooling water (28) in the second stage absorption step has a temperature below 65°C, more preferably below 60°C, or alternatively below 35°C.

12. Method according to one of Claims 1 to 11, wherein the aerosol separator (32) is a venturi type nozzle or a Brownian diffusion filter.

13. A system for treatment of an CO₂- and NH₃-containing flue gas comprising
a flue gas source (10) configured to provide an ammonia-containing flue gas (12),
a quenching unit (14) configured to cool the ammonia-containing flue gas (12) from the flue gas source (10) to a saturation temperature to provide a water-saturated flue gas (16);
a first stage absorption unit (20) configured to bring the water-saturated flue gas (16) into contact with an acidic cooling water (22) having a pH below 5 to provide an over-saturated, ammonia-reduced flue gas (24) having a temperature below the water-saturated flue gas (16),
a second stage absorption unit (26) configured to bring the over-saturated, ammonia-reduced flue gas (24) into direct contact with a second stage cooling water (28) having a pH above 6 and a temperature below the over-saturated, ammonia-reduced flue gas (24) to provide a cooled, acid-reduced flue gas (30),
a first sump (44) for collecting first stage process water (42) discharged from the first stage absorption unit (20);
recirculation pipes (45, 46) connecting the first sump (44) with the quenching unit (14) and/or the first stage absorption unit (20) via a first cooling unit (50) configured to cool recirculated first stage process water (42) ;
a second sump (54) for collecting second stage process water (52) discharged from the second stage absorption unit (26); and
recirculation pipes (56) connecting the second sump (54) with the second stage absorption unit (26) via a second cooling unit (60) configured to cool recirculated second stage process water (52).

14. System according to Claim 13, wherein the first sump (44) and the first stage absorption unit (20) are connected via an acid addition device (51) configured to prepare the acidic cooling water (22) by adding an acid to the recirculated first stage process water (42); and
wherein the second sump (54) is connected with the second stage absorption unit (26) via a base addition device (61), the base addition device (61) being configured to add a base to the recirculated second stage process water (52) .

15. System according to Claim 13 or 14, further comprising
an aerosol separator (32) configured to separate aerosols from the cooled, acid-reduced flue gas (30) to provide a cooled, aerosol-reduced flue gas (34); and/or
an amine scrubber (36) configured to capture CO₂ from the cooled, acid-reduced flue gas (30), or from the cooled, aerosol-reduced flue gas (34) discharged from the aerosol separator (32).
